# EUROPÄISCHE PATENTSCHRIFT

(11) **EP 3 697 668 B1**
(45) Veröffentlichungstag und Bekanntmachung des Hinweises auf die Patenterteilung: **30.07.2025**
(21) Anmeldenummer: 18789032.2
(22) Anmeldetag: 11.10.2018
(51) Int. Cl.: B61L 23/34, B61L 23/00, B61B 13/04

(54) **TRANSPORTSYSTEM FÜR PRODUKTIONS-, MONTAGE- UND/ODER LOGISTIKPROZESSE, UMFASSEND MEHRERE FAHRERLOSE SCHIENENFAHRZEUGE**
TRANSPORT SYSTEM FOR PRODUCTION, MOUNTING AND/OR LOGISTICS PROCESSES, COMPRISING SEVERAL DRIVERLESS RAIL VEHICLES
SYSTÈME DE TRANSPORT POUR DES PROCESSUS DE PRODUCTION, DE MONTAGE ET/OU DE LOGISTIQUE, COMPRENANT PLUSIEURS VÉHICULES FERROVIAIRES SANS CONDUCTEUR

(30) Priorität: 16.10.2017 DE 102017218433
(43) Veröffentlichungstag der Anmeldung: 26.08.2020
(73) Patentinhaber: Montratec GmbH, 78078 Niedereschach (DE)
(72) Erfinder: WORM, Sven, 72280 Dornstetten (DE); MÜLLER, Sebastian, 78628 Zepfenhan (DE); FRÖHER, Andreas, 78655 Dunningen (DE); WIECHERT, Rolf, 72160 Horb-Isenburg (DE)
(74) Vertreter: Patentanwälte Ruff, Wilhelm, Beier, Dauster & Partner mbB
(86) Internationale Anmeldenummer: PCT/EP2018/077714
(87) Internationale Veröffentlichungsnummer: WO 2019/076722

(56) Entgegenhaltungen:
- EP-A1- 1 216 910
- WO-A1-2004/028881
- DE-A1- 10 029 041
- DE-A1- 102012 008 846
- DE-U1- 202006 012 637
- US-A1- 2001 003 958

## Beschreibung

### ANWENDUNGSGEBIET UND STAND DER TECHNIK

Die Erfindung bezieht sich auf ein Transportsystem für Produktions-, Montage- und/oder Logistikprozesse mit mehreren fahrerlosen Schienenfahrzeugen. Die Erfindung betrifft insbesondere ein Transportsystem umfassend fahrerlose Schienenfahrzeuge mit mindestens einem Kollisionssensormodul.

Ein solches Transportsystem mit einem solchen fahrerlosen Schienenfahrzeug ist bekannt.

US 2001/0003958 A1 beschreibt ein Hängebahnsystem umfassend mehrere hängend angeordnete Schienenfahrzeuge, wobei die Schienenfahrzeuge an einer Frontseite ein optisches Kollisionssensormodul aufweist. Das optische Kollisionssensormodul umfasst vier Sensoren, die jeweils einen Schlitz aufweisen, wobei die Schlitze entlang Seiten eines Rechtecks angeordnet sind.

EP 1 216 910 A1 beschreibt eine Elektrohängebahn mit mehreren Wagen, wobei jeder Wagen einen Abstandssensor aufweist, welcher den Abstand zum vorauslaufenden Wagen überwacht.

DE 10 2012 008 846 A1 zeigt ein fahrerloses Transportsystem mit mehreren fahrerlosen Transportfahrzeugen), welche jeweils eine Umfelderkennungseinrichtung aufweisen, mittels welcher ein Detektionsfeld zur Kollisionsvermeidung einstellbar ist, wobei eine Größe der Detektionsfelder der fahrerlosen Transportfahrzeuge in Abhängigkeit von spezifischen Fahraufgaben des fahrerlosen Transportfahrzeugs einstellbar ist.

WO 2004/028881 A1 zeigt ein Multisensorsystem zur Fahrwegüberwachung für eine autonome mobile Einheit, wobei verschiedene Sensortypen fusioniert werden und mit dem Fusionsergebnis der Fahrweg überwacht wird.

DE 100 29 041 A1 zeigt eine Steuereinrichtung für ein Schienenfahrzeug mit zwei Antennen, von denen die eine Antenne Empfangen von Funksignalen eines in Fahrtrichtung gesehen vorausfahrenden Schienenfahrzeugs im vorderen Bereich des Schienenfahrzeugs und die andere Antenne zum Senden von Funksignalen an ein hinterherfahrendes Schienenfahrzeug im hinteren Bereich des Schienenfahrzeugs angeordnet ist.

### AUFGABE UND LÖSUNG

Der Erfindung liegt als Aufgabe die Bereitstellung eines Transportsystems mit einem fahrerlosen Schienenfahrzeug zugrunde, das einen zeitlich schnelleren beziehungsweise zeitsparenderen Betrieb ermöglicht.

Die Erfindung löst diese Aufgabe durch die Bereitstellung eines Transportsystem mit den Merkmalen des Anspruchs 1. Vorteilhafte Weiterbildungen und/oder Ausgestaltungen der Erfindung sind in den abhängigen Ansprüchen beschrieben.

Das erfindungsgemäße Transportsystem für Produktions-, Montage- und/oder Logistikprozesse umfasst mindestens eine Schiene, mehrere fahrerlose Schienenfahrzeug für Produktions-, Montage- und/oder Logistikprozesse, die entlang der Schiene für einen Materialtransport sensorüberwacht bewegbar sind. Des Weiteren weisen die fahrerlosen Schienenfahrzeuge jeweils ein vorderes und ein hinteres Fahrgestell, eine Transportplattform sowie ein vorderes und ein hinteres optisches Kollisionssensormodul auf. Die Kollisionssensormodule sind zum automatischen und berührungslosen Erfassen eines weiteren Schienenfahrzeugs, soweit vorhanden, auf der Schiene und zum, insbesondere automatischen, Vermeiden einer Kollision mit dem weiteren Schienenfahrzeug ausgebildet. Außerdem weisen die Kollisionssensormodule jeweils einen Erfassungsbereich von mindestens 140°, insbesondere von mindestens 160°, insbesondere von mindestens 180°, auf. Die optischen Kollisionssensormodule umfassen jeweils mehrere zu einem gemeinsamen Scheitel ausgerichtete Abstandsmesseinheiten.

Das vordere und das hintere Kollisionssensormodul ist jeweils ein optisches Kollisionssensormodul. Die optischen Abstandsmesseinheiten können auf einer elektronischen Entfernungsmessung anhand einer Laufzeitmessung, einer Phasenlagemessung oder einer Lasertriangulation von Licht, insbesondere Laser, basieren. Anders formuliert: die optische Abstandsmesseinheiten können einen Lichtsender und einen Lichtempfänger aufweisen. Der Lichtempfänger kann eine Intensität, eine Farbe oder eine Laufzeit des vom Lichtsender empfangenen Lichtes auswerten. Eine Wellenlänge des Lichts kann in einem Bereich von 660 Nanometer (nm, sichtbares rotes Licht) und 940 nm (Infrarotbereich) liegen. Kurz: das optische Kollisionssensormodul kann einen Laserscanner aufweisen.

Die Abstandsmesseinheiten senden jeweils ein lineares Sensorsignal, welches durch ein Messobjekt reflektiert wird. Das reflektierte Sensorsignal wird durch die Optik erfasst. In einer vorteilhaften Ausgestaltung basieren die Abstandsmesseinheiten auf einem Pulsbetrieb Verfahren, wobei eine Phasenverschiebung zwischen dem ausgesendeten Sensorsignal und dem reflektierten Sensorsignal für die Abstandserfassung ausgewertet und zudem eine Signalgüte ermittelt wird. Durch die Kombinationen mehrere Abstandsmesseinheiten wird ein Erfassungsbereich von mindestens 140° geschaffen. Die Signalgüte ist als zusätzliche Information nutzbar.

Auf einzelnen Streckenabschnitten kann eine Bewegung des fahrerlosen Schienenfahrzeugs ausschließlich über die Kollisionssensormodule geregelt werden, wobei beispielsweise eine Geschwindigkeit des fahrerlosen Schienenfahrzeugs in Abhängigkeit eines Abstands zu einem vor oder hinter dem Schienenfahrzeug auf dem Streckenabschnitt befindlichen weiteren Schienenfahrzeugs geregelt wird.

Wenn das weitere Schienenfahrzeug vorhanden ist, kann das Kollisionssensormodul das weitere Schienenfahrzeug erfassen und infolge des Erfassens eine Kollision vermeiden. Das Kollisionssensormodul kann dazu ausgebildet sein, infolge des erfassten Abstands ein Abbremsen des Schienenfahrzeugs zum Vermeiden einer Kollision einzuleiten und/oder auszuführen, gegebenenfalls bis zum Stillstand. Wenn kein weiteres Schienenfahrzeug, insbesondere in der Nähe, vorhanden ist, braucht das Schienenfahrzeug nicht abzubremsen.

Insbesondere kann das fahrerlose Schienenfahrzeug vor einer Kurve der Schiene und das weitere Schienenfahrzeug kann hinter der Kurve der Schiene sein. Der relativ große Erfassungsbereich ermöglicht ein Erfassen des weiteren Schienenfahrzeugs hinter der Kurve. Somit kann das Schienenfahrzeug mit größerer Geschwindigkeit zu der Kurve und/oder in die Kurve sich bewegen beziehungsweise fahren, insbesondere ohne dass es zu einer Kollision kommen muss. Dies kann als sensorüberwachte Kurvenfahrt bezeichnet werden. Insbesondere braucht das Schienenfahrzeug nicht vor der Kurve zu warten, bis es signalisiert bekommt, dass die Schiene hinter der Kurve frei ist. Dies kann als dynamische Kurvenfahrt bezeichnet werden. Infolgedessen ist ermöglicht, dass das Schienenfahrzeug zeitsparender beziehungsweise mit weniger oder keiner Zeitverzögerung Kurven fahren kann.

Weiter ermöglicht der relativ große Erfassungsbereich einen Transport von relativ breitem Fördergut, insbesondere mit einem Abmaß von 600 Millimeter (mm) mal 900 mm.

Der Erfassungsbereich kann ein horizontaler Erfassungsbereich sein. In anderen Worten: der Erfassungsbereich kann in einer horizontalen Ebene beziehungsweise in einer Bewegungsebene liegen, welche insbesondere durch das Schienenfahrzeug und/oder die Schiene definiert sein kann.

Zudem kann das Kollisionssensormodul beziehungsweise sein Erfassungsbereich derart ausgerichtet sein, dass eine Mitte des Erfassungsbereichs in Verlängerung, insbesondere einer Längsachse, des Schienenfahrzeugs und/oder einer Bewegungsrichtung des Schienenfahrzeugs liegen kann.

Des Weiteren kann das Kollisionssensormodul lernfähig ausgebildet sein. Insbesondere kann das Kollisionssensormodul verschiedene Konturen auswerten und zuordnen. Hierfür kann eine Signalgüte eines reflektierten Sensorstrahles ermittelt und ausgewertet werden.

Außerdem kann das Schienenfahrzeug mindestens ein Bewegungselement, wie eine Laufrolle, für eine schienengebundene Bewegung aufweisen. Insbesondere kann die Laufrolle um eine vertikale Achse beziehungsweise eine Hochachse drehbar gelagert sein.

Als fahrerloses Schienenfahrzeug kann ein Schienenfahrzeug mit eigenem Fahrantrieb, insbesondere einem Elektrofahrantrieb, verstanden werden, welches sich selbsttätig zwischen zwei oder mehr Stationen eines Produktions-, Montage- und/oder Logistikprozesses bewegen kann. Insbesondere kann das Schienenfahrzeug einen oder mehrere Energiespeicher für elektrische Energie zur Versorgung des Elektrofahrantriebs aufweisen beziehungsweise mit sich führen. Bei dem Energiespeicher kann es sich um einen als Akkumulator oder kurz Akku bezeichneten wiederaufladbaren Speicher für elektrische Energie handeln. Zusätzlich oder alternativ ist ein Antrieb mittels Brennstoffzelle denkbar, wie beispielsweise in WO 2005/118365 A1 beschrieben. Insbesondere kann der Fahrantrieb das mindestens eine Bewegungselement antreiben, soweit vorhanden.

Das fahrerlose Schienenfahrzeug kann insbesondere wie in DE 195 13 095 A1, EP 0 728 647 A1, DE 198 37 975 A1, DE 101 21 436 A1 und/oder WO 2005/118365 A1 beschrieben ausgebildet beziehungsweise gestaltet sein, auf deren Offenbarung hiermit vollumfänglich Bezug genommen wird.

Das Schienenfahrzeug kann als Shuttle bezeichnet werden.

In einer Ausgestaltung ist das fahrerlose Schienenfahrzeug entlang einer Schiene für einen Materialtransport nach vorne und nach hinten bewegbar. Das fahrerlose Schienenfahrzeug weist ein vorderes Kollisionssensormodul und ein hinteres Kollisionssensormodul auf. Das vordere Kollisionssensormodul ist zum, insbesondere automatischen, Erfassen eines weiteren Schienenfahrzeugs, soweit vorhanden, auf der Schiene vor dem Schienenfahrzeug und zum, insbesondere automatischen, Vermeiden einer Kollision mit dem weiteren Schienenfahrzeug ausgebildet. Das hintere Kollisionssensormodul ist zum, insbesondere automatischen, Erfassen eines weiteren Schienenfahrzeugs, soweit vorhanden, auf der Schiene hinter dem Schienenfahrzeug und zum, insbesondere automatischen, Vermeiden einer Kollision mit dem weiteren Schienenfahrzeug ausgebildet.

Das vordere Kollisionssensormodul ermöglicht ein Vorwärtsfahren, insbesondere ohne dass das Schienenfahrzeug von außen signalisiert zu bekommen braucht, dass die Schiene vor ihm frei ist. Dies kann als sensorüberwachte Vorwärtsfahrt bezeichnet werden. Das hintere Kollisionssensormodul ermöglicht ein Rückwärtsfahren, insbesondere ohne dass das Schienenfahrzeug von außen signalisiert zu bekommen braucht, dass die Schiene hinter ihm frei ist. Dies kann als sensorüberwachte Rückwärtsfahrt bezeichnet werden. Infolgedessen ist ermöglicht, dass das Schienenfahrzeug zeitsparender beziehungsweise mit weniger oder keiner Zeitverzögerung vorwärts und rückwärts fahren kann, insbesondere in einem Kopfbahnhof. Das vordere Kollisionssensormodul kann von dem hinteren Kollisionssensormodul verschieden sein, ist vorzugsweise aber baugleich zu diesem.

Das fahrerlose Schienenfahrzeug weist ein vorderes Fahrgestell und ein hinteres Fahrgestell auf. An dem vorderen Fahrgestell ist das vordere Kollisionssensormodul angeordnet, insbesondere befestigt. An dem hinteren Fahrgestell ist das hintere Kollisionssensormodul angeordnet, insbesondere befestigt. Dies ermöglicht, dass die Kollisionssensormodule jeweils optimal zum Erfassen eines weiteren Schienenfahrzeugs ausgerichtet sein können. Denn typischerweise ist das Fahrgestell beim Bewegen beziehungsweise Fahren, insbesondere in einer Kurve, in Bewegungsrichtung beziehungsweise Fahrtrichtung ausgerichtet. Insbesondere kann das Kollisionssensormodul beziehungsweise sein Erfassungsbereich derart ausgerichtet sein, dass eine Mitte des Erfassungsbereichs in Verlängerung, insbesondere einer Längsachse, des Fahrgestells liegen kann. Das Fahrgestell kann als Fahrwerk oder Fahrachse oder Laufwagen oder Antriebskopf bezeichnet werden. Insbesondere kann das vordere Fahrgestell von dem hinteren Fahrgestell verschieden sein, insbesondere aber baugleich zu diesem. Das vordere Fahrgestell und das hintere Fahrgestell sind mittels einer Transportplattform, insbesondere mechanisch, verbunden.

In einer Weiterbildung der Erfindung weist das fahrerlose Schienenfahrzeug mindestens einen Elektrofahrantrieb und mindestens einen Stromabnehmer auf. Der Stromabnehmer ist zum Anliegen an mindestens einer an oder im Bereich der Schiene vorgesehenen Stromschiene zum Versorgen des Elektrofahrantriebs mit elektrischer Energie ausgebildet. Des Weiteren kann das Schienenfahrzeug einen Abhebemechanismus zum Abheben des Stromabnehmers von der Stromschiene aufweisen.

Der Abhebemechanismus ermöglicht es, eine elektrische Kurzschlussgefahr zu verringern oder sogar ganz zu vermeiden. Insbesondere, wenn das fahrerlose Schienenfahrzeug eine Transportplattform aufweist, wie zuvor beschrieben, kann es bei einem Be- und/oder Entladen der Transportplattform zu einer Bewegung des Schienenfahrzeugs senkrecht zur Schiene kommen. Zusätzlich oder alternativ kann es bei einem Abheben des Schienenfahrzeugs von der Schiene oder bei einem Aufsetzen des Schienenfahrzeugs auf die Schiene zu einer Bewegung des Schienenfahrzeugs senkrecht zur Schiene kommen. Dabei könnte der Stromabnehmer, wenn er nicht abgehoben wäre, an einer ungewollten Stelle an der Schiene und/oder der Stromschiene zur Anlage kommen und einen elektrischen Kurzschluss auslösen beziehungsweise verursachen. Der Kurzschluss könnte ein Problem verursachen, welches insbesondere zu einer Zeitverzögerung im Betrieb führen kann. Somit ermöglicht der Abhebemechanismus einen zeitlich schnelleren beziehungsweise zeitsparenderen Betrieb.

Der Stromabnehmer und/oder die Stromschiene können/kann insbesondere wie in DE 198 37 975 A1 beschrieben ausgebildet beziehungsweise gestaltet sein, auf deren Offenbarung hiermit vollumfänglich Bezug genommen wird.

Der Abhebemechanismus kann ein automatischer Abhebemechanismus zum automatischen Abheben sein. Zusätzlich oder alternativ kann das fahrerlose Schienenfahrzeug eine benutzerbetätigbare Bedieneinrichtung, wie eine Drucktaste, zum Auslösen des Abhebemechanismus aufweisen. Außerdem kann der Abhebemechanismus zum Aufsetzen des Stromabnehmers auf die Stromschiene ausgebildet sein.

In einer Weiterbildung der Erfindung sind der Elektrofahrantrieb und der Stromabnehmer in das Fahrgestell integriert. Dies ermöglicht, dass eine Transportplattform, wie zuvor beschrieben, soweit vorhanden, diese Komponenten nicht aufzuweisen braucht und insbesondere für andere Aufgaben beziehungsweise Funktionen optimiert sein kann. Zusätzlich können/kann der Abhebemechanismus und/oder das Stromabnehmergehäuse in das Fahrgestell integriert sein.

Eine Bewegung der Schienenfahrzeuge erfolgt dabei zumindest abschnittsweise ohne von außen, beispielsweise mittels einer zentralen Steuereinheit, zugeführte Signale.

In einer Weiterbildung der Erfindung ist mindestens ein Transponder vorgesehen. Der Transponder ist zum Anordnen im Bereich der Schiene, insbesondere an der Schiene, ausgebildet und weist mindestens eine Information für das Schienenfahrzeug auf. Weiter weist das Schienenfahrzeug ein Lesegerät zum, insbesondere automatischen, Auslesen der Information aus dem Transponder auf.

Dies ermöglicht beim Bewegen, insbesondere Vorbeibewegen, beziehungsweise Fahren, insbesondere Vorbeifahren, die mindestens eine Information auszulesen beziehungsweise zu erfassen. In anderen Worten: das fahrerlose Schienenfahrzeug braucht zum Auslesen der Information nicht still zu stehen beziehungsweise anzuhalten. Somit ermöglicht dies einen zeitlich schnelleren beziehungsweise zeitsparenderen Betrieb.

Weiter ermöglicht dies ein einfaches Betreiben beziehungsweise Steuern des Transportsystems. Insbesondere braucht eine zentrale Steuerung, soweit vorhanden, des Transportsystems nicht zu erfassen, an welcher Position auf der Schiene sich das fahrerlose Schienenfahrzeug aktuell befindet und welche Information das Schienenfahrzeug für diese Position braucht. Die passende Information kann an passender Position an der Schiene mittels des Transponders angeordnet sein. Insbesondere kann die Information, zumindest während des Betriebs zeitweise, fest beziehungsweise statisch auf dem Transponder gespeichert sein. Anders formuliert: der Transponder braucht nicht mit der zentralen Steuerung, soweit vorhanden, in Informations- beziehungsweise Signalverbindung zu stehen beziehungsweise für jedes vorbeifahrende Schienenfahrzeug neu beziehungsweise dynamisch mit einer anderen Information bespielt zu werden.

Die Information kann insbesondere eine Fahranweisung sein, wie eine Zieladresse, eine Geschwindigkeit, insbesondere vor einer Kurve, und/oder eine für ein oder mehrere Schienenfahrzeuge spezifische Information. Die spezifische Information kann beispielsweise sein, dass das Schienenfahrzeug mit der Nummer 3 bis zur Station III durchfahren soll. Zusätzlich oder alternativ kann die Information des Transponders, welcher der Transponder I sein kann, beispielsweise sein, dass das Schienenfahrzeug die nächsten beiden Transponder II, III überfahren und erst bei Transponder IV wieder halten soll.

Zwischen zwei Transpondern werden die Schienenfahrzeuge vorzugsweise sensorüberwacht bewegt.

Der Transponder kann zum formschlüssigen, kraftschlüssigen und/oder stoffschlüssigen Verbinden mit der Schiene ausgebildet sein. Insbesondere zum Kleben an die Schiene.

Das Lesegerät kann ein Funklesegerät sein. Insbesondere kann das Lesegerät zum Senden eines elektrischen und/oder magnetischen Felds und zum Empfangen eines Felds von dem Transponder zum Auslesen ausgebildet sein.

Ein Profil der Schiene kann insbesondere zwei A-förmig angeordnete, geneigte Flächen aufweisen, entlang welcher um vertikale Drehachsen rotierende Laufrollen, soweit vorhanden, des Schienenfahrzeugs gemäß EP 0 728 647 A1 verfahrbar sind. Insbesondere kann das Schienenprofil in vorteilhaften Ausgestaltungen einen Abschnitt mit einem zumindest im Wesentlichen rautenförmigen Querschnitt aufweisen, wobei zwei Laufrollen und zwei parallel zu den Laufrollen angeordnete Stützrollen entlang der vier Flächen des rautenförmigen Querschnitts abrollen können. Die Schiene kann insbesondere wie in DE 195 13 095 A1, EP 0 728 647 A1, DE 198 37 975 A1, DE 101 21 436 A1 und/oder WO 2005/118365 A1 beschrieben ausgebildet beziehungsweise gestaltet sein, auf deren Offenbarung hiermit vollumfänglich Bezug genommen wird.

In einer Weiterbildung der Erfindung ist der Transponder ein passiver Transponder. Insbesondere kann passiver Transponder bedeuten, dass der Transponder zur Kommunikation und zur Abarbeitung interner Prozesse benötigte Energie ausschließlich aus einem Feld des Lesegeräts beziehen kann. Dies ermöglicht, dass der Transponder keine eigene Stromversorgung aufzuweisen braucht. Des Weiteren kann dies ermöglichen, dass der Transponder und das Lesegerät nur auf kurze Distanzen miteinander arbeiten können. Infolge dessen können Interferenzen mit einem weiteren, insbesondere räumlich getrennten, Transponder und/oder einem weiteren, insbesondere räumlich getrennten, Lesegerät reduziert oder sogar ganz vermieden werden.

In einer Ausgestaltung der Erfindung ist der passive Transponder ein RFID-Etikett (englisch: RFID-Tag) und das Lesegerät ist ein RFID-Lesegerät.

In einer Weiterbildung der Erfindung ist an dem vorderem oder hineren Fahrgestell das Lesegerät angeordnet, insbesondere befestigt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein erfindungsgemäßes Transportsystem für Produktions-, Montage- und/oder Logistikprozesse mit mindestens einem erfindungsgemäßen fahrerlosen Schienenfahrzeug in einer schematischen Ansicht,
- Fig. 2: das Schienenfahrzeug der Fig. 1 in einer schematischen Vorderansicht mit einem anliegenden Stromabnehmer,
- Fig. 3: das Schienenfahrzeug der Fig. 1 in einer schematischen Vorderansicht mit einem abgehobenen Stromabnehmer,
- Fig. 4: das Schienenfahrzeug der Fig. 1 in einer schematischen Seitenansicht,
- Fig. 5: das Schienenfahrzeug der Fig. 1 in einer Perspektivansicht von links oben,
- Fig. 6: das Schienenfahrzeug der Fig. 1 in einer weiteren Perspektivansicht von rechts oben,
- Fig. 7: das Schienenfahrzeug der Fig. 1 in einer nochmals weiteren Perspektivansicht von rechts unten,
- Fig. 8: das Schienenfahrzeug der Fig. 1 in einer nochmals weiteren Perspektivansicht von hinten links oben,
- Fig. 9: das Schienenfahrzeug der Fig. 1 in einer nochmals weiteren Perspektivansicht von vorne und
- Fig. 10: das Schienenfahrzeug der Fig. 1 in einer nochmals weiteren Perspektivansicht.

### DETAILLIERTE BESCHREIBUNG DER AUSFÜHRUNGSBEISPIELE

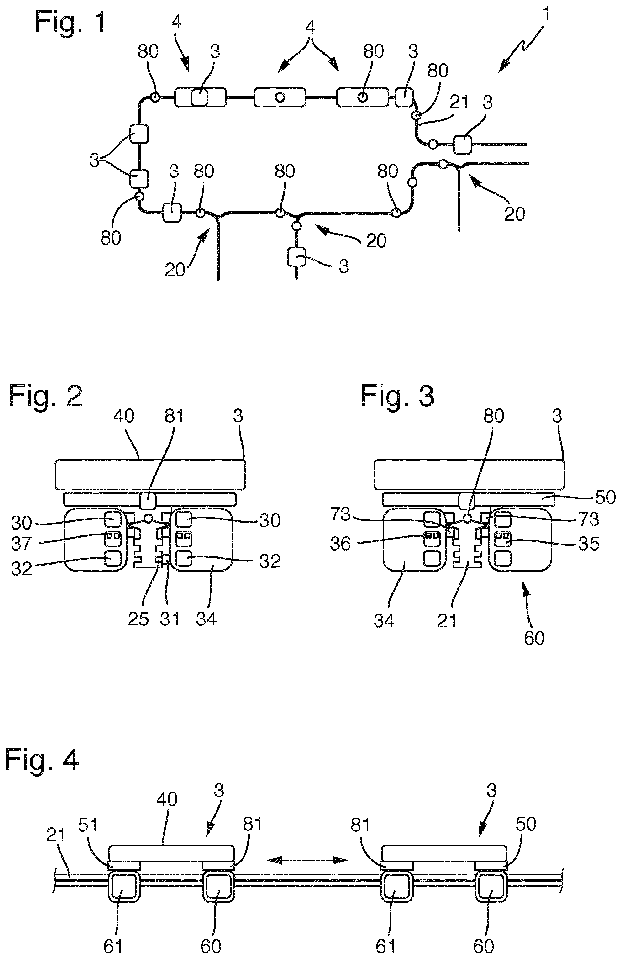

Fig. 1 zeigt ein erfindungsgemäßes Transportsystem 1 für einen Produktions-, Montage- und/oder Logistikprozess. Das Transportsystem 1 umfasst mehrere fahrerlose Schienenfahrzeuge 3. Im gezeigten Ausführungsbeispiel umfasst das Transportsystem 1 sieben Schienenfahrzeuge 3. In alternativen Ausführungsbeispielen kann das Transportsystem mindestens fünf, insbesondere mindestens zehn, insbesondere mindestens zwanzig, insbesondere mindestens fünfzig oder insbesondere mindestens einhundert Schienenfahrzeuge umfassen.

Des Weiteren umfasst das Transportsystem 1 mindestens eine Schiene 21, insbesondere mit Kurven, insbesondere ein Schienennetz. Im gezeigten Ausführungsbeispiel umfasst das Transportsystem 1 nur eine einzige Schiene 21. In alternativen Ausführungsbeispielen kann das Transportsystem 1 mindestens fünf Schienen, insbesondere mindestens zehn, insbesondere mindestens zwanzig, insbesondere mindestens fünfzig oder insbesondere mindestens einhundert Schienen umfassen.

Das fahrerlose Schienenfahrzeug 3 für einen Produktions-, Montage- und/oder Logistikprozesse ist entlang der Schiene 21 für einen Materialtransport bewegbar.

Das dargestellte Transportsystem 1 ermöglicht eine autarke Bewegung eines Schienenfahrzeugs 3 zu einer Zieladresse, wobei eine Route und/der ein Bewegungsprofil, d.h. eine Geschwindigkeit des Schienenfahrzeugs 3, mögliche Wartestellen, Brems- und Beschleunigungsvorgänge etc. nicht von einem zentralen System vorgegeben werden müssen.

In dem dargestellten Ausführungsbeispiel umfasst das Transportsystem 1 mehrere Transponder 80. Die Transponder 80 sind jeweils zum Anordnen im Bereich der Schiene 21, insbesondere an der Schiene 21, ausgebildet und weisen mindestens eine Information Info für das Schienenfahrzeug 3 auf. Außerdem weisen das Schienenfahrzeug 3 ein Lesegerät 81 (vgl. Fig. 4) zum Auslesen der Information Info aus dem Transponder 80 auf.

Im Detail ist der Transponder 80 ein passiver Transponder. Insbesondere ist der passive Transponder 80 ein RFID-Etikett und das Lesegerät 81 ist ein RFID-Lesegerät.

Außerdem weist das fahrerlose Schienenfahrzeug 3 das zwei Fahrgestelle 60, 61 auf. An einem Fahrgestell 60, 61 ist das Lesegerät 81 (vgl. Fig. 2 bis 4) angeordnet.

Im gezeigten Ausführungsbeispiel weist das Transportsystem 1 vor jeder Kurve und Weiche beziehungsweise Verzweigung 20 der Schiene 21 und an jeder Station 4 einen Transponder 80 auf. In alternativen Ausführungsbeispielen kann das Transportsystem nur einen einzigen oder mindestens zwei Transponder aufweisen. Durch die von dem Transponder 80 bereitgestellte Information Info kann das Schienenfahrzeug 3 auf die Kurve oder Weiche vorbereitet werden. Weitere kann/können der/die Transponder in alternativen Ausführungsbeispielen anders angeordnet sein.

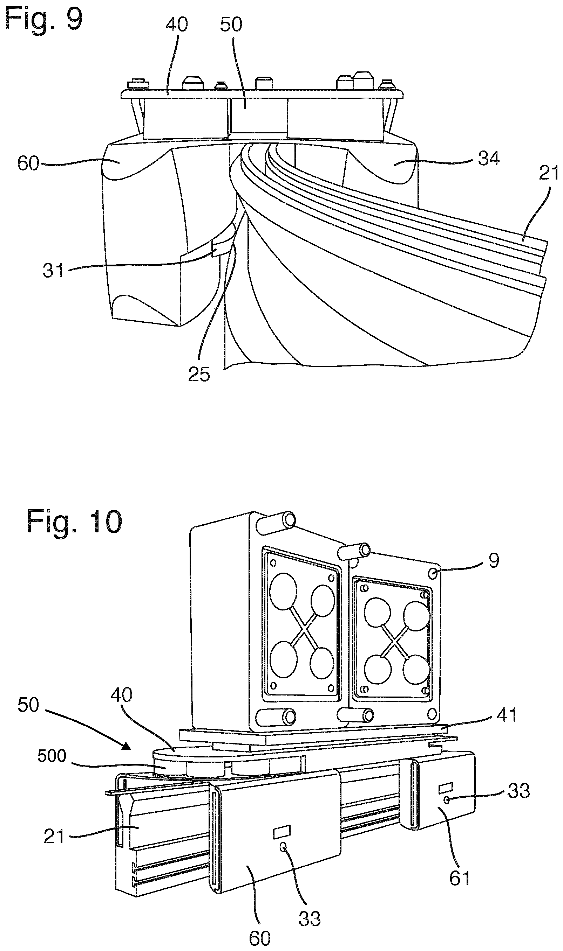

In dem dargestellten Ausführungsbeispiel sind drei Stationen 4 entlang der Schiene 21 für eine Verarbeitung eines mittels der Schienenfahrzeuge 3 transportierten Förderguts 9 (vgl. Fig. 10) vorgesehen. Das/die Schienenfahrzeuge 3 bewegen sich selbsttätig zwischen den Stationen 4 des Produktions-, Montage- und/oder Logistikprozesses.

Für eine selbsttätige Bewegung weisen die fahrerlosen Schienenfahrzeuge 3 jeweils zwei Kollisionssensormodul 50, 51 (vgl. Fig. 2 bis 10) auf.

Die Schienenfahrzeuge 3 sind nachfolgend mit Bezug auf die Fig. 2 bis 10 weiter erläutert.

Wie schematisch in Fig. 2 und 3 dargestellt, weist das fahrerlose Schienenfahrzeug 3 für den schienengebundenen Transport als Laufrollen 73 gestaltete Bewegungselemente auf, wie in EP 0 728 647 A1 beschrieben, mittels welchen es entlang der Schiene 21 verfahrbar ist. Insbesondere sind die Laufrollen 73 jeweils um eine vertikale Drehachse drehbar gelagert.

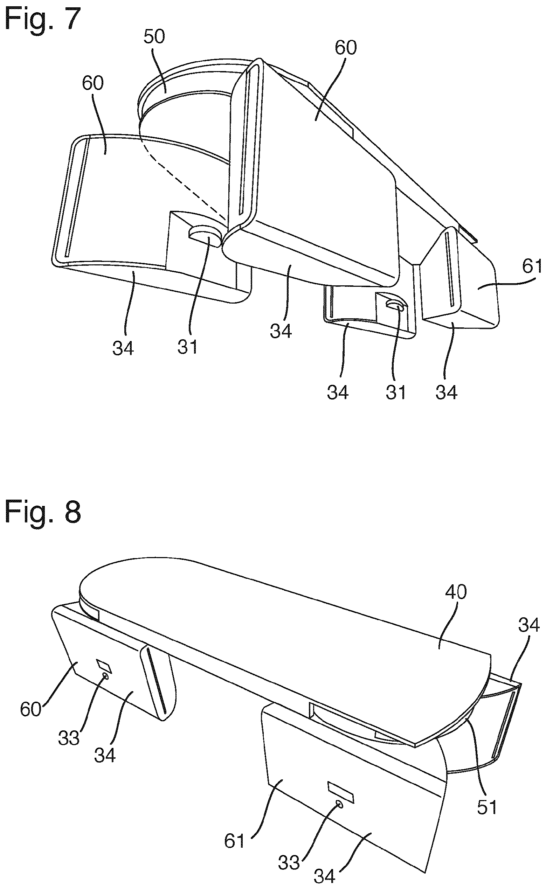

Weiter weist das dargestellte fahrerlose Schienenfahrzeug 3 mindestens einen Elektrofahrantrieb 30 und mindestens einen Stromabnehmer 31 in Form einer Rolle auf (s. auch Fig. 7 und 9). Der Elektrofahrantrieb 30 ist zum Antreiben des mindestens einen Bewegungselements 73 ausgebildet. Der Stromabnehmer 31 ist zum Anliegen an mindestens einer an der Schiene 21 vorgesehenen Stromschiene 25 zum Versorgen des Elektrofahrantriebs 30 mit elektrischer Energie ausgebildet. Außerdem weist das Schienenfahrzeug 3 einen Abhebemechanismus 32 zum Abheben des Stromabnehmers 31 von der Stromschiene 25 auf, wie in Fig. 2 zu erkennen.

Im gezeigten Ausführungsbeispiel weist der Abhebemechanismus 32 mindestens eine benutzerbetätigbare Bedieneinrichtung 33 in Form einer Drucktaste zum Auslösen des Abhebemechanismus 32 auf. In alternativen Ausführungsbeispielen kann der Abhebemechanismus zusätzlich oder alternativ ein automatischer Abhebemechanismus zum automatischen Abheben sein.

Weiter weist das fahrerlose Schienenfahrzeug 3 ein Stromabnehmergehäuse 34 auf. Der Abhebemechanismus 32 ist zum Einfahren des Stromabnehmers 31 in das Stromabnehmergehäuse 34 beim Abheben ausgebildet.

Zudem weist der Elektrofahrantrieb 30 eine kurzschlusssichere Steuerungselektronik 35 mit einer Schutzdiode 36 und/oder einer Schutzsicherung 37 auf.

Des Weiteren weist das fahrerlose Schienenfahrzeug zwei Fahrgestelle 60, 61 auf. In einem Fahrgestell 60, 61 sind der Elektrofahrantrieb 30 und der Stromabnehmer 31 integriert. Zusätzlich sind im gezeigten Ausführungsbeispiel der Abhebemechanismus 32 und das Stromabnehmergehäuse 34 in das Fahrgestell 60, 61 integriert.

Die Fig. 4 bis 10 zeigen Ausführungsbeispiele eines Schienenfahrzeugs 3 mit zwei Kollisionssensormodulen 50, 51. Das Kollisionssensormodul 50, 51 ist jeweils zum Erfassen eines weiteren Schienenfahrzeugs 3 auf der Schiene 21 (vgl. Fig. 1) und zum Vermeiden einer Kollision mit dem weiteren Schienenfahrzeug 3 ausgebildet. Außerdem weist das Kollisionssensormodul 50, 51 jeweils einen, insbesondere horizontal ausgerichteten, Erfassungsbereich EB von mindestens 140 ° auf.

Im Detail ist das Kollisionssensormodul 50, 51 ein optisches Kollisionssensormodul. Im gezeigten Ausführungsbeispiel weist das Kollisionssensormodul fünf optische Abstandsmesseinheiten 500 oder Optiken mit fünf, insbesondere horizontal überlappenden, Lichtstrahlenbereichen a, b, c, d, e auf. In alternativen Ausführungsbeispielen kann das Kollisionssensormodul mehr oder weniger Abstandsmesseinheiten oder Optiken, mindestens zwei Optiken mit zwei Lichtstrahlenbereichen aufweisen. Die Abstandsmesseinheiten 500 sind zu einem gemeinsamen Scheitel ausgerichtet. In dem dargestellten Ausführungsbeispiel sind die Abstandsmesseinheiten 500 jeweils mit einem Winkelabstand von 35° angeordnet, sodass ein Erfassungsbereich von mindestens 140° geschaffen wird. Außerdem weist das fahrerlose Schienenfahrzeug 3 zwei Fahrgestelle 60, 61 auf. An den Fahrgestellen 60, 61 sind die Kollisionssensormodule 50, 51 angeordnet. Im Detail sind die Kollisionssensormodule 50, 51 beziehungsweise deren Erfassungsbereiche EB jeweils derart ausgerichtet, dass eine Mitte des Erfassungsbereichs EB in Verlängerung, insbesondere einer Längsachse, des Fahrgestells 50, 51 liegt.

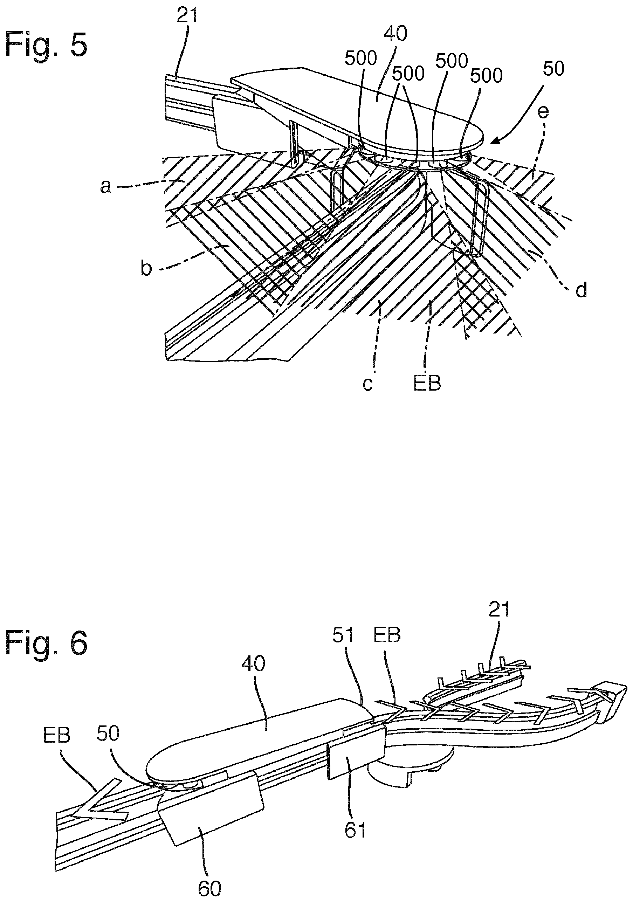

Das fahrerlose Schienenfahrzeug 3 ist vorzugsweise entlang der Schiene 21 nach vorne und nach hinten bewegbar. Weiter weist das fahrerlose Schienenfahrzeug 3 die beiden Kollisionssensormodule 50, 51 auf, wobei das eine Kollisionssensormodul ein vorderes Kollisionssensormodul 50 ist und das andere Kollisionssensormodul ein hinteres Kollisionssensormodul 51 ist, wie insbesondere in Fig. 4 und 6 zu erkennen. Das vordere Kollisionssensormodul 50 ist zum Erfassen eines weiteren Schienenfahrzeugs 3 auf der Schiene 21 vor dem Schienenfahrzeug 3 und zum Vermeiden einer Kollision mit dem weiteren Schienenfahrzeug 3 ausgebildet. Das hintere Kollisionssensormodul 51 ist zum Erfassen eines weiteren Schienenfahrzeugs 3 auf der Schiene 21 hinter dem Schienenfahrzeug 3 und zum Vermeiden einer Kollision mit dem weiteren Schienenfahrzeug 3 ausgebildet.

Zudem weist das fahrerlose Schienenfahrzeug 3 die beiden Fahrgestelle 60, 61 auf, wobei das eine Fahrgestell ein vorderes Fahrgestell 60 ist und das andere Fahrgestell ein hinteres Fahrgestell 61 ist. An dem vorderen Fahrgestell 60 ist das vordere Kollisionssensormodul 50 angeordnet. An dem hinteren Fahrgestell 61 ist das hintere Kollisionssensormodul 51 angeordnet.

Des Weiteren weist das fahrerlose Schienenfahrzeug 3 eine Transportplattform 40 auf. Die Transportplattform 40 ist auf den Fahrgestellen 60, 61 angeordnet, insbesondere gegenüber diesen drehbar um eine vertikale Achse beziehungsweise eine Hochachse drehbar gelagert. Im Detail sind das vordere Fahrgestell 60 und das hintere Fahrgestell 61 mittels der Transportplattform 40 verbunden.

Wie in Fig. 10 dargestellt, ist das Fördergut 9 mittels eines Werkstückträgers 41 auf der Transportplattform 40 angeordnet.

Insbesondere ist das fahrerlose Schienenfahrzeug 3 für eine Nutzlast von bis zu 50 Kilogramm ausgelegt.

Die gezeigten und oben erläuterten Ausführungsbeispiele sind lediglich beispielhaft und es sind zahlreiche Abwandlungen denkbar.

Wie die gezeigten und oben erläuterten Ausführungsbeispiele deutlich machen, stellt die Erfindung ein vorteilhaftes Transportsystem bereit, das einen zeitlich schnelleren beziehungsweise zeitsparenderen Betrieb ermöglicht.

## Patentansprüche

1. Transportsystem (1) für Produktions-, Montage- und/oder Logistikprozesse umfassend
- mindestens eine Schiene (21) und
- mehrere fahrerlose Schienenfahrzeuge (3), welche entlang der mindestens einen Schiene (21) für einen Materialtransport sensorüberwacht bewegbar sind,
- wobei die fahrerlosen Schienenfahrzeuge (3) jeweils ein vorderes Fahrgestell (60), ein hinteres Fahrgestell (61) und eine Transportplattform aufweisen,
**dadurch gekennzeichnet,**
**dass** die Transportplattform (40) auf den Fahrgestellen (60, 61) angeordnet ist und drehbar gegenüber den Fahrgestellen (60, 61) gelagert ist, und
**dass** die fahrerlosen Schienenfahrzeuge (3) jeweils ein vorderes Kollisionssensormodul (50) und ein hinteres Kollisionssensormodul (51) aufweisen,
- wobei das vordere Kollisionssensormodul (50) zum Erfassen eines weiteren Schienenfahrzeugs (3) auf der Schiene (21) vor dem Schienenfahrzeug (3) und zum Vermeiden einer Kollision mit dem weiteren Schienenfahrzeug (3) ausgebildet ist,
- wobei das hintere Kollisionssensormodul (51) zum Erfassen eines weiteren Schienenfahrzeugs (3) auf der Schiene (21) hinter dem Schienenfahrzeug (3) und zum Vermeiden einer Kollision mit dem weiteren Schienenfahrzeug (3) ausgebildet ist,
- wobei an dem vorderen Fahrgestell (60) das vordere Kollisionssensormodul (50) angeordnet ist und wobei an dem hinteren Fahrgestell (61) das hintere Kollisionssensormodul (51) angeordnet ist,
- wobei die Kollisionssensormodule (50, 51) jeweils einen Erfassungsbereich (EB) von mindestens 140 Grad aufweist, und
- wobei die Kollisionssensormodule (50, 61) optische Kollisionssensormodule sind und jeweils mehrere zu einem gemeinsamen Scheitel ausgerichtete optische Abstandsmesseinheiten aufweist.

2. Transportsystem (1) nach Anspruch 1, **dadurch gekennzeichnet, dass** das fahrerlose Schienenfahrzeug (3) mindestens einen Elektrofahrantrieb (30) und mindestens einen Stromabnehmer (31) aufweist, welche in das vordere oder das hintere Fahrgestell (60, 61) integriert sind.

3. Transportsystem (1) nach Anspruch 1 oder 2, umfassend
- mindestens einen Transponder (80), welcher zum Anordnen im Bereich der Schiene (21) ausgebildet ist und mindestens eine Information (Info) für das Schienenfahrzeug (3) aufweist,
- wobei die Schienenfahrzeuge (3) jeweils ein Lesegerät (81) zum Auslesen der Information (Info) aus dem Transponder (80) aufweisen.

4. Transportsystem (1) nach Anspruch 3,
**dadurch gekennzeichnet, dass** der Transponder (80) ein passiver Transponder ist.

5. Transportsystem (1) nach einem der Ansprüche 3 oder 4,
**dadurch gekennzeichnet, dass** der passive Transponder (80) ein RFID-Etikett ist und wobei das Lesegerät (81) ein RFID-Lesegerät ist.

6. Transportsystem (1) nach einem der Ansprüche 3 bis 5,
**dadurch gekennzeichnet, dass** an dem vorderen oder dem hinteren Fahrgestell (60, 61) das Lesegerät (81) angeordnet ist.

## Claims

1. Transport system (1) for production, installation and/or logistics processes, comprising
- at least one rail (21) and
- a plurality of driverless rail vehicles (3), which are movable along the at least one rail (21) for a material transport while being monitored by sensor,
- wherein the driverless rail vehicle (3) has a front chassis (60), a rear chassis (61) and a transport platform,
**characterized**
**in that** the transport platform (40) is arranged on the chassis (60, 61) and rotatable with respect to the chassis (60, 61), and
**in that** the driverless rail vehicles (3) each have a front collision sensor module (50) and a rear collision sensor module (51),
- wherein the front collision sensor module (50) is configured for capturing a further rail vehicle (3) on the rail (21) in front of the rail vehicle (3) and for avoiding a collision with the further rail vehicle (3),
- wherein the rear collision sensor module (51) is configured for capturing a further rail vehicle (3) on the rail (21) behind the rail vehicle (3) and for avoiding a collision with the further rail vehicle (3),
- wherein the front collision sensor module (50) is arranged on the front chassis (60) and wherein the rear collision sensor module (51) is arranged on the rear chassis (61),
- wherein the collision sensor modules (50, 51) each have a capturing region (EB) of at least 140 degrees, and
- wherein the collision sensor modules (50, 61) are optical collision sensor modules and each have a plurality of optical distance measurement units which are oriented toward a common vertex.

2. Transport system (1) as claimed in claim **1,**
**characterized in that** the driverless rail vehicle (3) has at least one electric drive (30) and at least one current collector (31), which are integrated in the front or the rear chassis (60, 61).

3. Transport system (1) as claimed in claim 1 or 2, comprising
- at least one transponder (80), which is configured for being arranged in the region of the rail (21) and has at least one piece of information (Info) for the rail vehicle (3),
- wherein the rail vehicles (3) each have a reader device (81) for reading the information (Info) from the transponder (80).

4. The transport system (1) as claimed in claim 3,
**characterized in that** the transponder (80) is a passive transponder.

5. The transport system (1) as claimed in one of claims 3 or 4,
**characterized in that** the passive transponder (80) is an RFID tag, and wherein the reader device (81) is an RFID reader.

6. The transport system (1) as claimed in one of claims 3 to 5,
**characterized in that** the reader device (81) is arranged on the front or rear chassis (60, 61).

## Revendications

1. Système de transport (1) pour des processus de production, de montage et/ou de logistique, comprenant
- au moins un rail (21) et
- plusieurs véhicules ferroviaires (3) sans conducteur, lesquels peuvent être déplacés sous la surveillance d'un capteur le long de l'au moins un rail (21) pour un transport de matériau,
- les véhicules ferroviaires (3) sans conducteur comportant chacun un châssis avant (60), un châssis arrière (61) et une plateforme de transport,
**caractérisé en ce**
**que** la plateforme de transport (40) est disposée sur les châssis (60, 61) et est montée de manière à pouvoir tourner par rapport aux châssis (60, 61), et
**que** les véhicules ferroviaires (3) sans conducteur comportent chacun un module de détection de collision avant (50) et un module de détection de collision arrière (51),
- le module de détection de collision avant (50) étant réalisé pour détecter un autre véhicule ferroviaire (3) sur le rail (21) devant le véhicule ferroviaire (3) et pour éviter une collision avec l'autre véhicule ferroviaire (3),
- le module de détection de collision arrière (51) étant réalisé pour détecter un autre véhicule ferroviaire (3) sur le rail (21) derrière le véhicule ferroviaire (3) et pour éviter une collision avec l'autre véhicule ferroviaire (3),
- le module de détection de collision avant (50) étant disposé sur le châssis avant (60) et le module de détection de collision arrière (51) étant disposé sur le châssis arrière (61),
- les modules de détection de collision (50, 51) comportant chacun une plage de détection (EB) d'au moins 140 degrés, et
- les modules de détection de collision (50, 61) étant des modules de détection de collision optiques et comportant chacun plusieurs unités de mesure de distance optiques orientées vers un sommet commun.

2. Système de transport (1) selon la revendication 1, **caractérisé en ce que** le véhicule ferroviaire (3) sans conducteur comporte au moins un entraînement de déplacement électrique (30) et au moins un pantographe (31), qui sont intégrés dans le châssis avant ou le châssis arrière (60, 61).

3. Système de transport (1) selon la revendication 1 ou 2, comprenant
- au moins un transpondeur (80), qui est réalisé pour être disposé dans la zone du rail (21) et présente au moins une information (info) pour le véhicule ferroviaire (3),
- les véhicules ferroviaires (3) comportant chacun un lecteur (81) destiné à lire l'information (info) provenant du transpondeur (80).

4. Système de transport (1) selon la revendication 3, **caractérisé en ce que** le transpondeur (80) est un transpondeur passif.

5. Système de transport (1) selon l'une des revendications 3 ou 4,
**caractérisé en ce que** le transpondeur passif (80) est une étiquette RFID et le lecteur (81) étant un lecteur RFID.

6. Système de transport (1) selon l'une des revendications 3 à 5,
**caractérisé en ce que** le lecteur (81) est disposé sur le châssis avant ou le châssis arrière (60, 61).
